# EUROPEAN PATENT APPLICATION

(11) **EP 4 563 788 A1**
(43) Date of publication of application: **04.06.2025**
(21) Application number: 24216934.0
(22) Date of filing: 02.12.2024
(51) Int. Cl.: F01D 5/00, F01D 21/00, G01H 1/00, G01M 15/14, F01D 17/02

(54) **A METHOD AND SYSTEM OF INSPECTING FAN BLADES OF A TURBINE ENGINE**

(30) Priority: 01.12.2023 US 202318525990
(71) Applicant: RTX Corporation, Farmington, CT 06032 (US)
(72) Inventor: WARREN, Eli, Farmington, 06032 (US)
(74) Representative: Dehns

(57) **Abstract**

A method of inspecting fan blades (42) of a turbine engine includes obtaining images (82) of a plurality of fan blades (42) during rotation, sensing a time of arrival for each of the plurality of fan blades (42), defining a signature (90, 92) that is indicative of a time of arrival for each individual one of the plurality of fan blades (42), correlating the obtained images (82) of the plurality of fan blades (42) with the signature (90, 92) that is indicative of the time of arrival of each of the individual fan blades (42), and identifying a feature of a specific one of the plurality of fan blades (42) based on the obtained images (82) and the signature (90, 92) that is indicative of the time of arrival of the individual one of the plurality of fan blades (42).

## Description

### BACKGROUND

A gas turbine engine typically includes a fan section with a plurality of fan blades. The fan blades are subject to wear and damage during each blade's operational live. Accordingly, fan blades are periodically inspected. Inspections method involve manual inspection of each fan blade by a technician when the engine is shut down. Inspections that are conducted with the engine shut down are costly and require a technician with special training. Moreover, the down time of the engine for further increase costs.

Turbine engine manufacturers continue to seek further improvements to overall engine operation and operational life including maintenance and fault detection activities.

### SUMMARY

A method of inspecting fan blades of a turbine engine according to an aspect of the present invention includes, among other possible things, obtaining images of a plurality of fan blades during rotation, sensing a time of arrival for each of the plurality of fan blades, defining a signature that is indicative of a time of arrival for each individual one of the plurality of fan blades, correlating the obtained images of the plurality of fan blades with the signature that is indicative of the time of arrival of each of the individual fan blades, and identifying a feature of a specific one of the plurality of fan blades based on the obtained images and the signature that is indicative of the time of arrival of the individual one of the plurality of fan blades.

In an embodiment of the above, the defined signatures of the time of arrival for each individual one of the plurality of fan blades is obtained during rotation at speeds that do not load the plurality of fan blades.

In an embodiment according to any of the previous embodiments, the defined signatures of the time of arrival for each of individual one of the plurality of fan blades is obtained during rotation at speeds that do not induce a vibrational response for any of the plurality of fan blades.

In an embodiment according to any of the previous embodiments, the method further includes indexing each of the plurality of blades and matching multiple images of each of the plurality of blades based on the indexing of each of the plurality of blades.

In an embodiment according to any of the previous embodiments, the method includes a plurality of images for each of the plurality of fan blades during a plurality of rotations.

In an embodiment according to any of the previous embodiments, the method further includes obtaining the images of the plurality of blades during rotation at different fields of view.

In an embodiment according to any of the previous embodiments, the defined signature of each of the plurality of fan blades is indexed to match the images of each of the fan blades at the different fields of view.

In an embodiment according to any of the previous embodiments, the method further includes sensing the time of arrival of each of the fan blades with a signal that is generated by an eddy current sensor that is mounted proximate a tip of each of the plurality of fan blades.

In an embodiment according to any of the previous embodiments, a plurality of the signatures indicative of the time of arrival for each individual one of the plurality of fan blades are obtained and used to verify an identification of an individual one of the fan blades.

In an embodiment according to any of the previous embodiments, the method further includes evaluating the identified feature with a processing system and generating a signal to prompt a further maintenance action based on the identified feature that includes a predetermined characteristic.

An inspection system for fan blades of a turbine engine according to another aspect of the present invention includes, among other possible things, a tip sensing system where a signal that is indicative of a time of arrival of each of a plurality of fan blades is generated, an image capture device where images of each of the plurality of fan blades are captured during rotation, and a controller that is programed to generate a signature that is indicative of an individual one of the plurality of fan blades and correlate the generated signature with each of the images such that each of the images is correlated to an individual one of the plurality of fan blades.

In an embodiment of the above, the tip sensing system includes at least one eddy current sensor that is disposed at a location where a tip of each of the plurality of fan blades passes during rotation.

In an embodiment according to any of the previous embodiments, the image capture device captures images at a speed that does not induce loading on the plurality of fan blades.

In an embodiment according to any of the previous embodiments, the controller is further programmed to generate a plurality of signatures for each of the plurality of fan blades and to utilize the plurality of signatures to index each of the plurality of blades to corresponding images for each of the individual fan blades.

In an embodiment according to any of the previous embodiments, the controller further includes a memory device for storing the images of each of the plurality of fan blades and the generated signatures for each of the plurality of fan blades.

In an embodiment according to any of the previous embodiments, the controller is further programmed to identify a feature of a specific one of the plurality of fan blades from the images and generate a signal to prompt a further maintenance action based on a characteristic of the identified feature.

A turbine engine according to another aspect of the present invention includes, among other possible things, a plurality of fan blades that are rotatable about an axis, a core engine where shaft power is generated to rotate the plurality of fan blades, a fan case that circumscribes the plurality of fan blades, a tip sensing system that is disposed within the fan case, the tip sensing system generates a signal that is indicative of a time of arrival of a tip of each of a plurality of fan blades, an image capture device where images of each of the plurality of fan blades are captured during rotation, and a controller that is programed to generate a signature that is indicative of an individual one of the plurality of fan blades and correlate the generated signature with each of the images such that each of the images is correlated to an individual one of the plurality of fan blades.

In an embodiment of the above, the tip sensing system includes at least one eddy current sensor that is disposed at a location within the fan case where a tip of each of the plurality of fan blades passes during rotation.

In an embodiment according to any of the previous embodiments, the controller is further programmed to generate a plurality of signatures for each of the plurality of fan blades and to utilize the plurality of signatures to index each of the plurality of blades to corresponding images for each of the individual fan blades.

In an embodiment according to any of the previous embodiments, the controller is further programmed to identify a feature of a specific one of the plurality of fan blades from the images and generate a signal to prompt a further maintenance action based on a characteristic of the identified feature.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine and fan blade inspection system.
Figure 2 is a schematic view of an example fan blade inspection system.
Figure 3 is a graph illustrating a set of time of arrival signatures for a plurality of fan blades.
Figure 4 is a graph illustrating another set of time of arrival signatures for a plurality of fan blades.
Figure 5 is a schematic illustration of a feature as it appears in a first field of view.
Figure 6 is a schematic illustration of the feature shown in Figure 5 as it appears in a second field of view.

### DETAILED DESCRIPTION

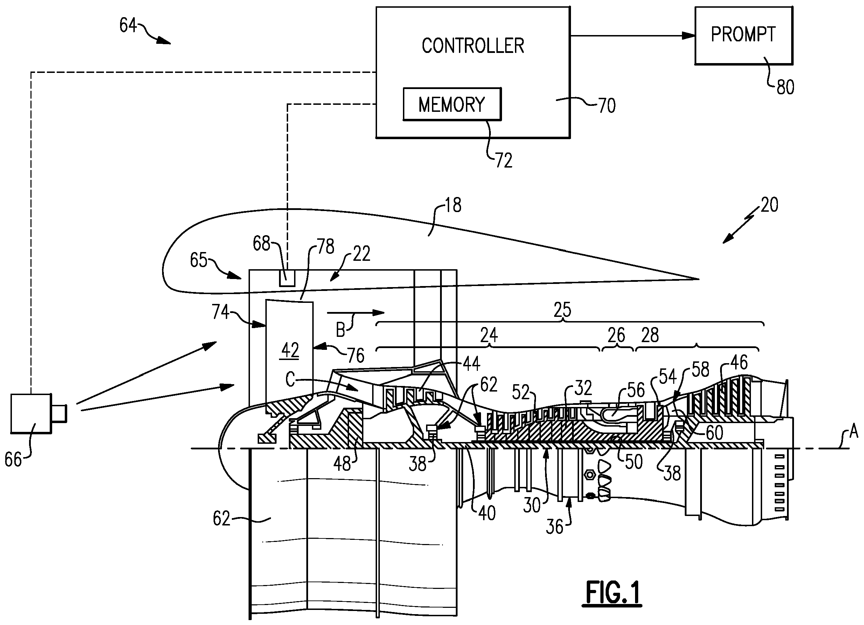

Figure 1 schematically illustrates a gas turbine engine 20 and an inspection system 64 for identifying features of fan blades 42 that may require maintenance or further inspection. A disclosed example inspection system 64 utilizes signals indicative of a time of arrival for each of a plurality of fan blades 42 to index images obtained during rotation to a specific one of the fan blades 42.

The gas turbine engine 20 is disclosed herein as a two-spool turbofan that generally incorporates a fan section 22 and a core engine 25 that includes a compressor section 24, a combustor section 26 and a turbine section 28. The fan section 22 is circumscribed by a fan case 62 within a nacelle 18. The fan section 22 drives air along a bypass flow path B in a bypass duct defined within a nacelle 18, while the compressor section 24 drives air along a core flow path C for compression and communication into the combustor section 26 then expansion through the turbine section 28.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects the fan section 22, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54.

A combustor 56 is arranged in the exemplary gas turbine engine 20 between the high pressure compressor 52 and the high pressure turbine 54. A mid-turbine frame 58 of the engine static structure 36 is arranged generally between the high pressure turbine 54 and the low pressure turbine 46. The mid-turbine frame 58 includes airfoils 60 which are in the core airflow path C. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion.

Although depicted as a two-spool turbofan gas turbine engine in the disclosed non-limiting embodiment, it should be understood that the concepts described herein may be applied to other types of turbine engines and architectures.

The fan blades 42 are subject to wear and damage caused by many different factors. Each of the fan blades 42 includes a leading edge 74, trailing edge 76 and a tip 78. Damage may occur at these surfaces and along other surfaces of the fan blade 42. For this reason, the fan blades 42 are periodically inspected to assure proper operation. Manual inspection is costly, time intensive and can require special training. An example inspection system 64 is schematically shown and identifies features on each of the fan blades 42 that may be indicative of wear and damage. The system 64 identifies features that exhibit characteristics that warrant further manual inspection and generates a prompt 80 to indicate that such further inspection is warranted.

The disclosed system 64 includes at least one image capture device that in this example is shown as camera 66. The camera 66 takes images of the plurality of blades 42 as the blades are rotated during rotation and sends those images to a controller 70. The images taken by the camera 66 during rotation are not uniquely identified or indexed to specific ones of the fan blades 42. It can be difficult and resource consuming to identify the specific one of the fan blades 42 illustrated in each image.

A tip sensing system 65 sends signals indicate of a time of arrival of each of the plurality of fan blades 42. The signals indicative of the time of arrival are used to index the images from the camera 66 so that each image is identified and synched to an individual one of the fan blades 42. In this example, the tip sensing system 65 includes at least one sensor 68 supported within the fan case 62 at a location by which the tip 78 of each of the fan blades passes during operation.

The example controller 70 relates to a device and system for performing necessary computing or calculation operations of the inspection system 64. The controller 70 may be specially constructed for operation of the inspection system 64, or it may comprise at least a general-purpose computer selectively activated or reconfigured by software instructions stored in a memory device 72. The controller 70 may further be part of full authority digital engine control (FADEC) or an electronic engine controller (EEC).

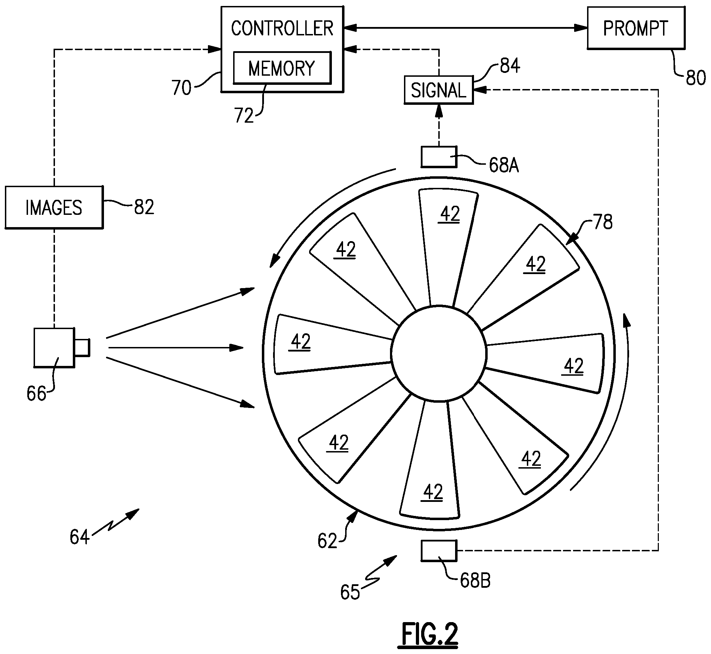

Referring to Figure 2 with continued reference to Figure 1, the inspection system 64 is schematically shown with the fan blades 42 circumscribed by the fan case 62. In this disclosed example two sensors 68A-B are shown and generate a signal 84 that is indicative of a passing of the tip 78 of each fan blade 42. Each fan blade 42 passes the sensors 68A-B at a unique time and therefore may provide an indication of a specific individual fan blade 42.

The camera 66 captures images 82 during rotation of the fan blades 42. The images 82 are communicated to the controller 70 and stored in memory 72. Signals 84 from the sensors 68A-B are also communicated to the controller 70. The signals are utilized to generate a unique signature that corresponds to each of the plurality of fan blades 42.

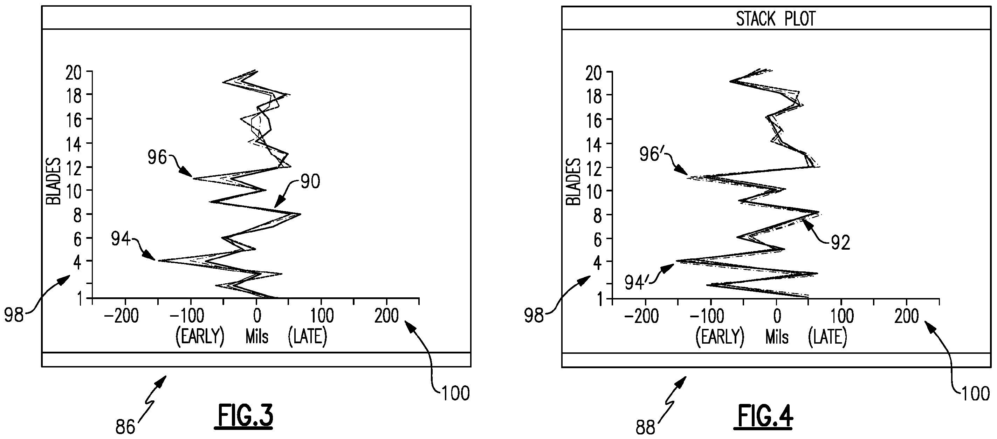

Referring to Figures 3 and 4 with continued reference to Figure 2, an example stack plot 86 illustrates a time of arrival 100 for each of the blades indicated at 98. The plot 86 is a signature 90 that includes a unique time of arrival for each of the plurality of fan blades 42. For example, point 96 and point 94 illustrate a unique time of arrival for each of the respective blades. The signature 90 is obtained in a non-loaded operating condition so that the signature represents unique physical characteristics for each blade and not characteristics of each blade that may be induced by operating loads or vibration.

Several signatures can be obtained and evaluated to remove variation and provides a consistent signature for use in synchronizing the images 82. Figure 4 illustrates a second signature 92 with points 94' and 96' that correspond to the same points 94, 96 in the first signature 90. Both stack plots 86 and 88 are taken without loading on the fan blades 42. Although two stack plots 86 and 88 are shown by way of example, many plots may be utilized to obtain signatures for each fan blade 42 to a desired level of confidence.

Moreover, the different signals may be obtained at different operating conditions to provide further data utilized to provide a desired level of confidence in that each point of each signature is from a unique one of the plurality of fan blades 42. Once a good signature for each of the blades 42 is obtained, each blade can be indexed for each field of view for each of the images 82 captured by the camera.

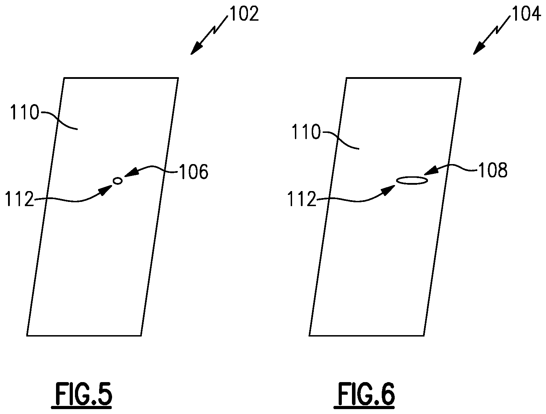

Referring to Figures 5 and 6, the field of view may differ based on rotational speeds of the fan blades 42. Multiple images of the same blade show a different depiction of the same defect due to lighting, speed, etc. Figures 5 and 6 illustrate the same blade 110 and the same feature 112 at a first field of view 102 and a second field of view 104. The feature 112 has an appearance 106 in the field of view 102 than the appearance 108 shown in the second field of view 104. Similarities of defects (size/shape/location) make it difficult to identify any single blade from only the images. There is a chance that the blades will be misidentified and/or many more images will be needed to make any positive determination. The signatures 90, 92 (Figures 3 and 4) provide an identifiable and unique marker for correlating each of the plurality of blades to the images.

Referring to Figure 2, 3 and 4, an example operational embodiment includes the obtaining images 82 of the plurality of fan blades 42 during rotation. Rotation of the blades occurs at a speed that does not induce loading or a vibrational response. In this way, the signatures obtained are consistent and indicative of unique structural characteristics of each fan blade 42. The sensors 68A-B of the tip sensing system 65 generate signals 84 that are indicative of a time of arrival for each of the plurality of fan blades 42. The signals 84 are utilized to generate signatures 90, 92 as shown in stack plots 86 and 88. The signatures 90, 92 have points that represent a specific one of the plurality of fan blades 42. Several signatures 90, 92 may be obtained and compared to assure the veracity of each point as it corresponds to one of the fan blades 42.

The signatures 90, 92 may be obtained overtime during different operational cycles of the engine 20. The signatures 90, 92 are stored in the memory 72 of the controller 70 for use during image capture. The camera 66 may be set up proximate the fan blades 42 to capture images during operation or during an inspection operation. The controller 70 is programed to correlate the generated signatures 90, 92 with each of the images 82 such that each of the images 82 is correlated to an individual one of the plurality of fan blades 42.

In an example embodiment, the images obtained by the camera 66 and the time of arrival signatures 90, 92 are synched to a common clock. The location of the sensors 68A-B is known and provides a timestamp for the time of arrival of each of the fan blades 42. The field of view of the camera 66 is also known relative to the fan section 22, the fan blades 42 and the location of the sensors 68A-B. Accordingly, each image obtained by the camera 66 is synched to the corresponding one of the fan blades 42 as they pass the known location of each of the sensors 68A-B.

The controller 70 is further programmed to identify features in each of the fan blades 42 based on the obtained images 82 and the signatures 90, 92. The controller 70 is further programmed to generate a prompt signal 80 that prompts a further maintenance action based on a characteristic of the identified feature. The characteristics of the feature may include size, shape, location, and/or any other characteristic that may be indicative of wear or damage that degrades performance.

Accordingly, embodiments of the disclosed inspection system 64 provide for the indexing of images to individual fan blades 42 utilizing signatures identifying unique time of arrival performance of each individual fan blade 42.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A method of inspecting fan blades of a turbine engine comprising:
obtaining images (82) of a plurality of fan blades (42) during rotation;
sensing a time of arrival for each of the plurality of fan blades (42);
defining a signature (90, 92) indicative of a time of arrival for each individual one of the plurality of fan blades (42);
correlating the obtained images (82) of the plurality of fan blades (42) with the signature (90, 92) indicative of the time of arrival of each of the individual fan blades (42); and
identifying a feature of a specific one of the plurality of fan blades (42) based on the obtained images (82) and the signature (90, 92) indicative of the time of arrival of the individual one of the plurality of fan blades (42).

2. The method as recited in claim 1, wherein the defined signatures (90, 92) of the time of arrival for each individual one of the plurality of fan blades (42) is obtained during rotation at speeds that do not load the plurality of fan blades (42).

3. The method as recited in claim 1 or 2, wherein the defined signatures (90, 92) of the time of arrival for each of individual one of the plurality of fan blades (42) is obtained during rotation at speeds that do not induce a vibrational response for any of the plurality of fan blades (42).

4. The method as recited in any preceding claim, further comprising indexing each of the plurality of blades (42) and matching multiple images (82) of each of the plurality of blades (42) based on the indexing of each of the plurality of blades (42).

5. The method as recited in any preceding claim, comprising a plurality of images (82) for each of the plurality of fan blades (42) during a plurality of rotations.

6. The method as recited in any preceding claim, wherein:
the method further comprises obtaining the images (82) of the plurality of blades (42) during rotation at different fields of view, optionally wherein the defined signature (90, 92) of each of the plurality of fan blades (42) is indexed to match the images (82) of each of the fan blades (42) at the different fields of view.

7. The method as recited in any preceding claim, further comprising sensing the time of arrival of each of the fan blades (42) with a signal generated by an eddy current sensor (68) mounted proximate a tip (78) of each of the plurality of fan blades (42).

8. The method as recited in any preceding claim, wherein a plurality of the signatures (90, 92) indicative of the time of arrival for each individual one of the plurality of fan blades (42) are obtained and used to verify an identification of an individual one of the fan blades (42).

9. The method as recited in any preceding claim, further comprising evaluating the identified feature with a processing system and generating a signal (80) to prompt a further maintenance action based on the identified feature including a predetermined characteristic.

10. An inspection system for fan blades of a turbine engine comprising:
a tip sensing system (65) where a signal indicative of a time of arrival of each of a plurality of fan blades (42) is generated;
an image capture device (66) where images (82) of each of the plurality of fan blades (42) are captured during rotation; and
a controller (70) programed to generate a signature (90, 92) indicative of an individual one of the plurality of fan blades (42) and correlate the generated signature (90, 92) with each of the images (82) such that each of the images (82) is correlated to an individual one of the plurality of fan blades (42).

11. The inspection system as recited in claim 10, wherein the tip sensing system (65) comprises at least one eddy current sensor (68) disposed at a location where a tip (78) of each of the plurality of fan blades (42) passes during rotation.

12. The inspection system as recited in claim 10 or 11, wherein the image capture device (66) captures images (82) at a speed that does not induce loading on the plurality of fan blades (42).

13. The inspection system as recited in any of claims 10 to 12, wherein the controller (70) is further programmed to generate a plurality of signatures (90, 92) for each of the plurality of fan blades (42) and to utilized the plurality of signatures (90, 92) to index each of the plurality of blades (42) to corresponding images (82) for each of the individual fan blades (42).

14. The inspection system as recited in any of claims 10 to 13, wherein:
the controller (70) further comprises a memory device (72) for storing the images (82) of each of the plurality of fan blades (42) and the generated signatures (90, 92) for each of the plurality of fan blades (42); and/or
the controller (70) is further programmed to identify a feature of a specific one of the plurality of fan blades (42) from the images (82) and generate a signal (80) to prompt a further maintenance action based on a characteristic of the identified feature.

15. A turbine engine comprising:
a plurality of fan blades (42) rotatable about an axis (A);
a core engine (25) where shaft power is generated to rotate the plurality of fan blades (42);
a fan case (62) circumscribing the plurality of fan blades (42); and
the inspection system (64) of any of claims 10 to 14, wherein the tip sensing system (65) is disposed within the fan case (62).
